# FASCICULE DE BREVET EUROPEEN

(11) **EP 3 436 373 B1**
(45) Date de publication et mention de la délivrance du brevet: **28.08.2024**
(21) Numéro de dépôt: 17719862.9
(22) Date de dépôt: 29.03.2017
(51) Int. Cl.: B65G 47/26, B65G 47/88

(54) **CONVOYEUR**
FÖRDERBAND
CONVEYOR

(30) Priorité: 29.03.2016 FR 1652676
(43) Date de publication de la demande: 06.02.2019
(73) Titulaire: Elcom, 38300 Bourgoin-Jallieu (FR)
(72) Inventeur: VERGNE, Eric, 69260 Charbonnières-les-Bains (FR)
(74) Mandataire: Germain Maureau
(86) Numéro de dépôt international: PCT/FR2017/050725
(87) Numéro de publication internationale: WO 2017/168096

(56) Documents cités:
- FR-A1- 2 801 292
- US-A- 3 000 490
- US-A- 5 381 888
- US-A1- 2011 017 575
- ELCOM: "Modular Transfer System - New Products 2012", WWW.LINEARMODUL.DK, 12 November 2012 (2012-11-12), pages 1 - 40, XP055916752, Retrieved from the Internet <URL:https://www.linearmodul.dk/Filer/PDF-Kataloger/PDF-Katalog%20Elcom%20Palettbanor%20Nyheter%202012.pdf> [retrieved on 20220429]
- ELCOM: "MODULAR TRANSFER SYSTEM & CONVEYORS - NEW PRODUCTS 2014", 24 June 2014 (2014-06-24), pages 1 - 36, XP055328575, Retrieved from the Internet <URL:http://elcom-automation.com/wp-content/uploads/2014/06/New-products-2014.pdf> [retrieved on 20161213]

## Description

La présente invention concerne un convoyeur, tel que par exemple, un convoyeur de chaîne automatique.

Il est connu d'utiliser des convoyeurs présentant une bande de convoyage permettant de déplacer des objets entre différents postes d'une chaîne automatique.

Le plus souvent, le convoyeur présente une bande de convoyage qui traverse plusieurs postes.

D'une manière générale, la bande de convoyage est une bande en matériau polymère souple présentant un pégosité adaptée pour entraîner en translation des objets posés sur la bande de convoyage.

Généralement, la bande de convoyage est une boucle enchâssée et mise en tension sur la structure du convoyeur, de manière à présenter une surface plane permettant le déplacement d'objets.

La bande de convoyage est mise en mouvement par des moyens d'entrainement incorporés au convoyeur.

En fonctionnement, des objets sont placés, en flux continu, sur la bande de convoyage.

Le mouvement de la bande de convoyage permet de déplacer les objets.

D'une manière générale, il est important que la bande de convoyage fonctionne en continu et soit arrêtée le moins possible.

Cependant, certains postes peuvent nécessiter l'immobilisation d'un objet. Pour ce faire, des butées mobiles permettent d'immobiliser un objet pendant que la bande de convoyage continue de fonctionner et de déplacer d'autres objets.

Le document FR 2 801 292 A1 décrit un convoyeur comportant, au niveau de chaque poste d'accumulation des éléments supports soulevant chaque objet par rapport aux bandes d'entraînement et, des moyens élastiques assurant, au poste d'accumulation, un contact entre les bandes d'entraînement et l'objet afin de permettre l'entraînement de ce dernier par les bandes, dès qu'il est libéré. Plus particulièrement, FR 2 801 292 A1 divulgue un convoyeur comprenant (i) au moins une structure, (ii) au moins une bande de convoyage permettant de déplacer un objet sur la structure, (iii) des moyens d'entraînement de la, ou chaque, bande de convoyage et (iv) une butée mobile entre une position d'immobilisation d'un objet sur la bande de convoyage et une position de libération autorisant le déplacement d'un objet sur la bande de convoyage, et où le convoyeur comprend au moins un sabot monobloc comprenant une semelle et deux nervures, la semelle reliant les deux nervures de sorte que la semelle et les deux nervures définissent une rainure dans laquelle est positionnée la bande de convoyage, le sabot comprenant des moyens de mise en contact de la bande de convoyage avec un objet positionné sur le sabot pour permettre l'entraînement de l'objet par la bande de convoyage lorsque la butée mobile est en position de libération, les moyens de mise en contact comprenant au moins un organe élastique.

Dans le cas d'objets lourds ou en matière abrasive, la friction de la bande de convoyage sous l'objet immobile peut user prématurément la bande de convoyage.

Dans ce contexte, un but de la présente invention est de fournir un convoyeur permettant de préserver l'intégrité de la bande de convoyage lors de l'immobilisation d'un objet et permettant de déplacer des objets.

Selon une définition générale, l'invention concerne un convoyeur selon la revendication 1 comprenant (i) au moins une structure, (ii) au moins une bande de convoyage permettant de déplacer un objet sur la structure, (iii) des moyens d'entrainement de la, ou chaque, bande de convoyage et (iv) une butée mobile entre une position d'immobilisation d'un objet sur la bande de convoyage et une position de libération autorisant le déplacement d'un objet sur la bande de convoyage. Le convoyeur comprend au moins un sabot comprenant une semelle et deux nervures. La semelle relie les deux nervures de sorte que la semelle et les deux nervures définissent une rainure dans laquelle est positionnée la bande de convoyage. Les deux nervures sont configurées pour élever, en surplomb de la bande de convoyage, un objet circulant sur la bande de convoyage, pour que le sabot permette de réduire les efforts appliqués par un objet immobile sur la bande de convoyage en mouvement. Le sabot est positionné en amont de la butée mobile et comprend des moyens de mise en contact de la bande de convoyage avec un objet positionné sur le sabot pour permettre l'entrainement de l'objet par la bande de convoyage lorsque la butée mobile est en position de libération.

Selon l'invention, le sabot permet d'écarter un objet de la bande de convoyage, en le surélevant. Ainsi, en soutenant un objet, le sabot permet de supprimer les efforts de gravité exercés par l'objet sur la bande roulante. En outre, le positionnement du sabot en amont d'une butée mobile, permet de soutenir un objet lorsque celui-ci est immobilisé par la butée mobile. Ainsi, l'objet immobilisé est surélevé par rapport à la bande de convoyage, permettant ainsi de préserver la bande de convoyage d'une usure prématurée due aux frottements contre un objet immobile.

Les moyens de mise en contact permettent de maintenir le contact entre la bande de convoyage et l'objet soutenu par le sabot. Ainsi, le sabot permet de réduire les efforts appliqués par l'objet immobile sur la bande de convoyage en mouvement, et les moyens de mise en contact permettent à la bande de convoyage d'entrainer l'objet soutenu par le sabot avec une force de friction juste nécessaire, lorsque la butée mobile passe en position de libération.

La synergie du sabot avec les moyens de mise en contact permet au convoyeur de préserver l'intégrité de la bande de convoyage lors de l'immobilisation d'un objet et de déplacer des objets.

En outre, le convoyeur selon l'invention permet avantageusement de déplacer des objets présentant une masse importante, en utilisant des moyens d'entrainement standards.

En d'autres termes, la combinaison du sabot avec les moyens de mise en contact permet d'augmenter la masse des objets déplacés par le convoyeur, sans augmenter la puissance et la consommation énergétique des moyens d'entrainement. Ainsi, le convoyeur selon l'invention permet de diminuer les couts matériels associés au convoyage de fortes charges, et de réaliser des économies d'énergie.

Les deux nervures permettent de recevoir un objet et de le supporter de manière stable.

En outre, le sabot est un élément monobloc comprenant les deux nervures et la semelle, ce qui permet au sabot d'être un élément unitaire, autonome, aisément remplaçable et repositionnable en cas, par exemple, de modification du convoyeur. De plus, la structure simple du sabot lui permet aussi d'être intégré sur un convoyeur déjà existant.

Selon une disposition particulière au moins une nervure peut comprendre au moins un organe rotatif permettant le déplacement d'un objet sur ladite au moins une nervure.

L'organe rotatif permet de faciliter le déplacement d'un objet sur la nervure.

Selon une disposition particulière, le, ou chaque, organe rotatif peut être un galet.

Selon une disposition particulière le, ou chaque, organe rotatif peut être une bille.

Selon une disposition particulière le, ou chaque, organe rotatif peut être un rouleau.

Selon l'invention, les moyens de mise en contact peuvent comprendre au moins un organe élastique et au moins un élément tournant.

Selon l'invention, la combinaison d'un élément élastique avec un élément tournant permet aux moyens de mise en contact d'exercer un effort sur la bande de convoyage pour la mettre en contact avec un objet positionné sur l'organe élévateur, et de permettre le déplacement de l'objet suivant le défilement de la bande de convoyage.

Selon une disposition particulière, le, ou chaque, organe élastique peut être un ressort.

Selon une disposition particulière, le, ou chaque, élément tournant peut comprendre au moins un galet lié en rotation à un axe mobile.

Selon une disposition particulière, le, ou chaque, élément tournant peut comprendre deux galets liés en rotation à l'axe mobile.

Selon une disposition particulière, le, ou chaque, élément tournant peut comprendre une bille.

Selon une disposition particulière, la, ou chaque, semelle peut présenter au moins un logement configuré pour recevoir les moyens de mise en contact.

Selon une disposition particulière, la structure peut comprendre au moins un profilé présentant au moins, une portion rainurée pour recevoir le, ou chaque, sabot.

Selon une disposition particulière, le sabot permet de surélever un objet d'au moins 0,3 millimètres par rapport à la bande de convoyage.

Selon une disposition particulière, le sabot permet de surélever un objet d'une distance comprise entre 0,4 millimètres et 0,6 millimètres par rapport à la bande de convoyage.

D'autres caractéristiques et avantages de la présente invention se dégageront de la description qui va suivre, en regard des dessins ci-annexés, qui représentent à titre d'exemple non limitatif, un mode de réalisation de l'invention.
- La figure 1 est une vue en perspective d'un convoyeur selon l'invention ;
- La figure 2 est une vue de coté, schématique, d'un convoyeur selon l'invention ;
- La figure 3 est une vue en perspective d'une portion d'un convoyeur selon l'invention ;
- La figure 4 est une vue en perspective d'un sabot selon l'invention ;
- La figure 5 est une vue en perspective éclatée d'un sabot et d'une portion d'une bande de convoyage selon l'invention ;
- La figure 6 est une vue en perspective d'un sabot et d'une portion d'une bande de convoyage selon l'invention ;
- La figure 7 est une vue en coupe d'un profilé de la structure d'un convoyeur selon l'invention ;
- La figure 8 est une vue en coupe d'une portion d'un profilé destinée à recevoir un sabot selon l'invention ;

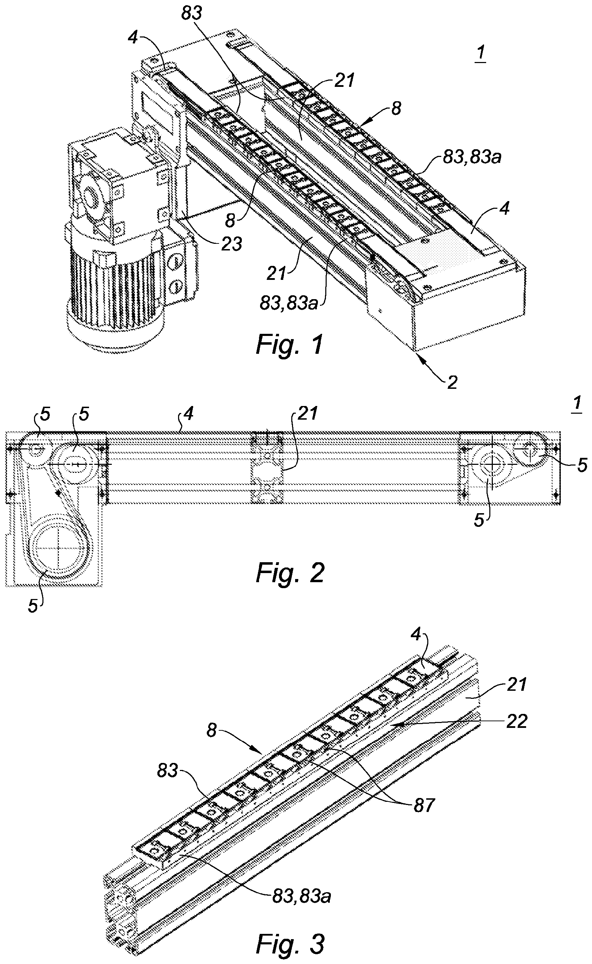

L'invention propose un convoyeur 1 représenté sur les figures 1 et 2. Selon le mode de réalisation ici présenté, le convoyeur 1 présente une structure 2, deux bandes de convoyage 4, des moyens d'entrainement de la bande de convoyage 4 et une butée mobile (non représentée).

La structure 2 du convoyeur comprend des profilés 21 qui supportent des bandes de convoyage 4 et des pieds 23.

On peut remarquer sur la figure 1 que, selon le mode de réalisation ici présenté, la structure 2 présente des paires de profilés 21, parallèles deux à deux et accueillant chacun une bande de convoyage 4. Les avantages de cette architecture seront présentés ultérieurement.

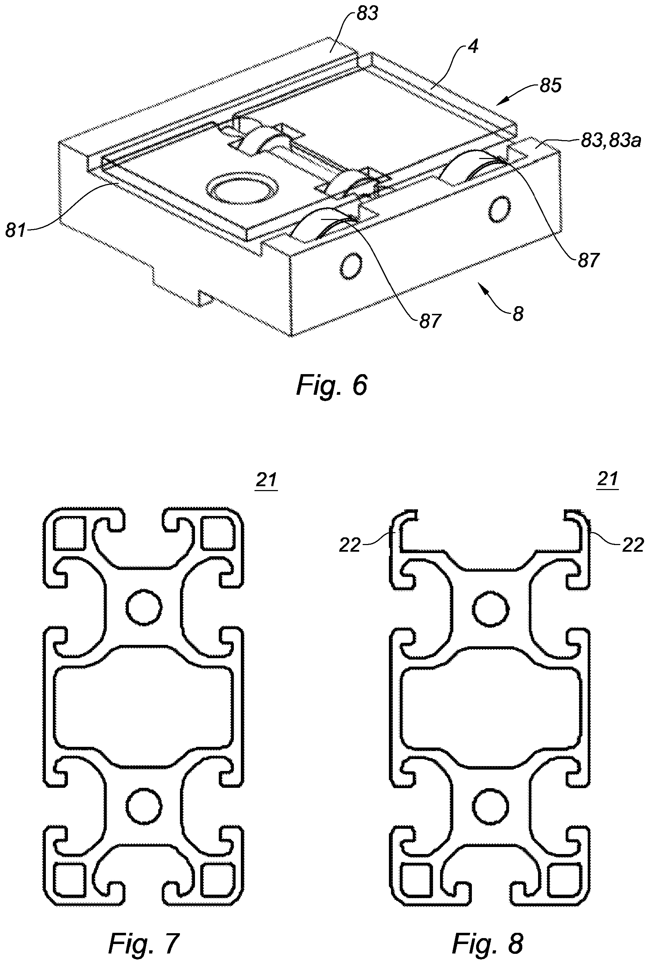

En outre, comme on peut le voir sur la figure 8 chaque profilé 21 présente une ou plusieurs portions 22 rainurées. La fonction des portions rainurées 22 sera détaillée ultérieurement.

Chaque bande de convoyage 4 est une nappe en polymère tendre présentant une pégosité adaptée pour entraîner en translation un objet positionné sur la bande de convoyage 4. De plus, chaque bande de convoyage 4 peut présenter une âme en textile.

Comme on peut l'observer sur la figure 2, la bande de convoyage 4 se présente sous la forme d'une boucle.

Les moyens d'entrainement de la bande de convoyage comprennent plusieurs roues 5 réparties sur la structure 2. Les roues 5 permettent de tendre et de mettre en mouvement la bande de convoyage 4.

De plus, le convoyeur 1 comprend plusieurs butées mobiles (non représentées). Chaque butée est mobile entre une position d'immobilisation d'un objet sur la bande de convoyage 4 et une position de libération autorisant le déplacement d'un objet sur la bande de convoyage 4.

En outre, le convoyeur 1 comprend plusieurs sabots 8. Chaque sabot 8 comprend une semelle 81 reliant deux nervures 83. Chaque sabot 8 est monobloc est peut être réalisé en polymère ou en métal. La géométrie simple du sabot 8 permet avantageusement une réalisation peu onéreuse par fonderie ou injection plastique.

La semelle 81 présente une géométrie sensiblement parallélépipédique et les deux nervures 83 sont positionnées en vis-à-vis l'une de l'autre, chacune le long d'un bord opposé de la semelle 81. Ainsi, la semelle 81 et les deux nervures 83 définissent une rainure 85.

Comme on peut l'observer, selon le mode de réalisation ici présenté, une nervure 83a de chaque sabot 8 présente deux ouvertures 84 adaptées pour recevoir chacune un galet 87 rotatifs et un axe 94.

Selon un autre mode de réalisation, chaque nervure 83 de chaque sabot 8 pourrait comprendre un ou plusieurs galets 87.

La fonction des galets 87 sera présentée ultérieurement.

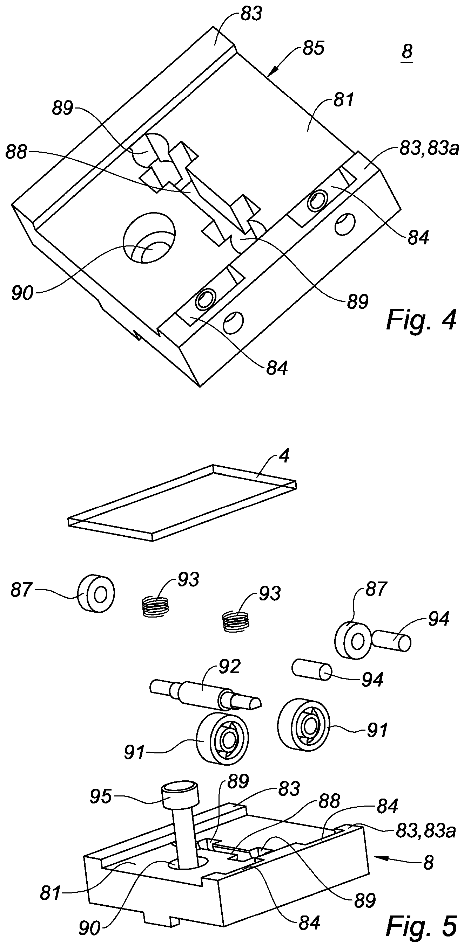

Il est remarquable, sur les figures 3 et 4, que la semelle 81 présente un logement 88 adapté pour recevoir deux galets 91, un axe mobile 92 et deux ressorts 93. Le logement 88 présente une géométrie en forme de H avec deux trous 89 sensiblement cylindriques, destinés à recevoir chacun un ressort 93.

Les ressorts 93 sont positionnés dans les trous 89 du logement 88, sous l'axe mobile 92.

Les deux galets 91 sont liés en rotation à l'axe mobile 92. L'ensemble constitué de l'axe mobile 92 et des deux galets 91 est mobile en translation dans le logement 88. De plus la semelle 81 présente un trou de fixation 90 destiné à recevoir une vis 95 permettant de visser la semelle 81 à un profilé 21.

Tel que représenté sur la figure 3, chaque sabot 8 est conçu pour être positionné dans une portion rainurée 22 d'un profilé 21.

La bande de convoyage 4 recouvre la semelle 81 de chaque sabot 8 et traverse la rainure 85 de chaque sabot 8. Ainsi, pour chaque sabot 8, l'ensemble constitué des deux galets 91 et de l'axe mobile 92 est positionné sous la bande de convoyage 4.

Selon le mode de réalisation présenté sur la figure 1, les sabots 8 sont positionnés par paires, en regard, un sabot 8 étant positionné sur chacun des profilés 21 d'une paire de profilés 21. Ainsi, un objet volumineux peut prendre appui, simultanément sur les deux sabots 8.

De plus, selon ce mode de réalisation, les nervures 83a des sabots 8 d'une même paire sont positionnées symétriquement par rapport à un axe longitudinal du convoyeur. Ainsi, chaque nervure 83a peut être positionnée sur une bordure extérieure du convoyeur.

En outre, les sabots 8 sont positionnés en amont d'une butée mobile, par rapport au sens de défilement de la bande de convoyage 4.

A l'usage, un objet volumineux peut être placé en appui sur deux bandes de convoyage 4 parallèles d'une même paire de profilés 21.

Le défilement des bandes de convoyage 4 permet de faire circuler l'objet.

A l'amont d'une butée mobile, l'objet est placé sur des sabots 8.

Lorsqu'un objet repose sur des sabots 8, les nervures 83 supportent l'objet et le maintiennent écarté en surplomb de la bande de convoyage 4. En d'autres termes, les sabots 8 permettent de surélever l'objet, par rapport à la bande de convoyage 4.

Ainsi, lorsque la butée mobile correspondante passe en position d'immobilisation, l'objet est immobilisé sur les sabots 8 et la bande de convoyage 4 peut continuer à défiler sans être endommagée par les frottements dus à l'immobilisation de l'objet.

D'une manière particulièrement avantageuse, l'ensemble constitué des deux galets 91 et de l'axe mobile 92, poussé par les ressorts dans le logement 88 de la semelle 81, exerce une poussée sur la bande de convoyage 4. La poussée ainsi exercée permet de mettre en contact la bande de convoyage 4 avec l'objet supporté par les sabots 8.

La rotation des galets 91 autour de l'axe mobile 92 permet de minimiser les frottements exercés sur la bande de convoyage 4.

Lorsque la butée mobile passe en position de libération, la mise en contact de la bande de convoyage 4 avec l'objet permet à la bande de convoyage 4 d'entrainer en translation l'objet.

Avantageusement, les galets 87 des nervures 83a permettent à l'objet de glisser avec des frottements réduits sur les nervures 83a, pour suivre le mouvement de la bande de convoyage 4.

Ainsi, l'invention fournit un convoyeur 1, permettant de préserver l'intégrité de la bande de convoyage lors de l'immobilisation d'un objet et permettant de déplacer des objets.

## Revendications

1. Convoyeur (1) comprenant (i) au moins une structure (2), (ii) au moins une bande de convoyage (4) permettant de déplacer un objet sur la structure (2), (iii) des moyens d'entrainement de la, ou chaque, bande de convoyage (4) et (iv) une butée mobile entre une position d'immobilisation d'un objet sur la bande de convoyage (4) et une position de libération autorisant le déplacement d'un objet sur la bande de convoyage (4), et où le convoyeur (1) comprend au moins un sabot (8) monobloc comprenant une semelle (81) et deux nervures (83), la semelle (81) reliant les deux nervures (83) de sorte que la semelle (81) et les deux nervures (83) définissent une rainure (85) dans laquelle est positionnée la bande de convoyage (4), les deux nervures (83) étant configurées pour élever en surplomb de la bande de convoyage (4), un objet circulant sur la bande de convoyage (4), de sorte que le sabot (8) permette de réduire les efforts appliqués par un objet immobile sur la bande de convoyage (4) en mouvement, le sabot (8) étant positionné en amont de la butée mobile et comprenant des moyens de mise en contact de la bande de convoyage (4) avec un objet positionné sur le sabot (8) pour permettre l'entrainement de l'objet par la bande de convoyage (4) lorsque la butée mobile est en position de libération,
les moyens de mise en contact comprenant au moins un organe élastique et au moins un élément tournant,
leur combinaison permettant aux moyens de mise en contact d'exercer un effort sur la bande de convoyage pour la mettre en contact avec un objet positionné sur le sabot, et de permettre le déplacement de l'objet suivant le défilement de la bande de convoyage.

2. Convoyeur (1) selon la revendication 1, **caractérisé en ce que** au moins une nervure (83a) comprend au moins un galet (87) permettant le déplacement d'un objet sur ladite au moins une nervure (83a).

3. Convoyeur (1) selon la revendication 1 ou la revendication 2, **caractérisé en ce que** le, ou chaque, organe élastique est un ressort.

4. Convoyeur (1) selon la revendication 3, **caractérisé en ce que** le, ou chaque, élément tournant comprend au moins un galet (91) lié en rotation à un axe mobile (92).

5. Convoyeur (1) selon la revendication 4, **caractérisé en ce que** le, ou chaque, élément tournant comprend deux galets (91) liés en rotation à l'axe mobile (92).

6. Convoyeur (1) selon l'une des revendications 1 à 5, **caractérisé en ce que** la, ou chaque, semelle (81) présente au moins un logement (88) configuré pour recevoir les moyens de mise en contact.

7. Convoyeur (1) selon l'une des revendications 1 à 6, **caractérisé en ce que** la structure (2) comprend au moins un profilé (21) présentant au moins, une portion rainurée (22) pour recevoir le, ou chaque, sabot (8).

8. Convoyeur (1) selon la revendication 7, **caractérisé en ce que** la structure (2) comprend au moins deux profilés (21) parallèles et deux bandes de convoyage (4) parallèles positionnées chacune sur un profilé (21) correspondant, au moins un sabot (8) étant positionné sur chaque profilé (21) pour permettre à un objet de prendre appui simultanément sur les sabots (8) positionnés sur chacun des deux profilés (21).

## Patentansprüche

1. Förderer (1), umfassend (i) mindestens eine Struktur (2), (ii) mindestens ein Förderband (4), das es ermöglicht, einen Gegenstand auf der Struktur (2) fortzubewegen, (iii) Antriebsmittel des oder jedes Förderbandes (4), und (iv) einen zwischen einer Immobilisierungsposition eines Gegenstandes auf dem Förderband (4) und einer Freigabeposition, welche die Fortbewegung eines Gegenstandes auf dem Förderband (4) gestattet, beweglichen Anschlag, und wobei der Förderer (1) mindestens einen Aufsatz (8) in einem Stück umfasst, der eine Sohle (81) und zwei Rippen (83) umfasst, wobei die Sohle (81) die beiden Rippen (83) verbindet, sodass die Sohle (81) und die beiden Rippen (83) eine Einkerbung (85) definieren, in der das Förderband (4) positioniert ist, wobei die beiden Rippen (83) konfiguriert sind, um über dem Förderband (4) überhängend einen Gegenstand anzuheben, der auf dem Förderband (4) zirkuliert, sodass der Aufsatz (8) ermöglicht, die durch einen unbewegten Gegenstand auf das in Bewegung befindliche Förderband (4) wirkenden Kräfte zu reduzieren, wobei der Aufsatz (8) stromaufwärts des beweglichen Anschlags positioniert ist, und Mittel zum In-Kontakt-Bringen des Förderbandes (4) mit einem auf dem Aufsatz (8) positionierten Gegenstand umfasst, um den Antrieb des Gegenstandes durch das Förderband (4) zu ermöglichen, wenn der bewegliche Anschlag in Freigabeposition ist,
wobei die Mittel zum In-Kontakt-Bringen mindestens ein elastisches Organ und mindestens ein drehendes Element umfassen,
wobei deren Kombination es den Mitteln zum In-Kontakt-Bringen ermöglicht, eine Kraft auf das Förderband auszuüben, um es in Kontakt mit einem Gegenstand zu bringen, der auf dem Aufsatz positioniert ist, und um die Fortbewegung des Gegenstandes entlang des Ablaufs des Förderbandes zu ermöglichen.

2. Förderer (1) nach Anspruch 1, **dadurch gekennzeichnet, dass** mindestens eine Rippe (83a) mindestens eine Laufrolle (87) umfasst, die das Fortbewegen eines Gegenstandes auf der mindestens einen Rippe (83a) ermöglicht.

3. Förderer (1) nach Anspruch 1 oder Anspruch 2, **dadurch gekennzeichnet, dass** das oder jedes elastische Organ eine Feder ist.

4. Förderer (1) nach Anspruch 3, **dadurch gekennzeichnet, dass** das oder jedes drehende Element mindestens eine Laufrolle (91) umfasst, die mit einer beweglichen Achse (92) drehverbunden ist.

5. Förderer (1) nach Anspruch 4, **dadurch gekennzeichnet, dass** das oder jedes drehende Element zwei Laufrollen (91) umfasst, die mit der beweglichen Achse (92) drehverbunden sind.

6. Förderer (1) nach einem der Ansprüche 1 bis 5, **dadurch gekennzeichnet, dass** die oder jede Sohle (81) mindestens eine Aufnahme (88) aufweist, die konfiguriert ist, um die Mittel zum In-Kontakt-Bringen zu empfangen.

7. Förderer (1) nach einem der Ansprüche 1 bis 6, **dadurch gekennzeichnet, dass** die Struktur (2) mindestens ein Profil (21) umfasst, das mindestens einen eingekerbten Abschnitt (22) aufweist, um den oder jeden Aufsatz (8) zu empfangen.

8. Förderer (1) nach Anspruch 7, **dadurch gekennzeichnet, dass** die Struktur (2) mindestens zwei parallele Profile (21) und zwei parallele Förderbänder (4) umfasst, die jeweils auf einem entsprechenden Profil (21) positioniert sind, wobei mindestens ein Aufsatz (8) auf jedem Profil (21) positioniert ist, um es einem Gegenstand zu ermöglichen, gleichzeitig an den Aufsätzen (8) zur Auflage zu kommen, die auf jedem der beiden Profile (21) positioniert sind.

## Claims

1. A conveyor (1) comprising (i) at least one structure (2), (ii) at least one conveyor belt (4) allowing displacing an object on the structure (2), (iii) means for driving the, or each, conveyor belt (4) and (iv) a stop movable between an immobilization position of an object on the conveyor belt (4) and a release position enabling the displacement of an object over the conveyor belt (4), and where the conveyor (1) comprises at least one monolithic skid shoe (8) comprising a sole (81) and two ribs (83), the sole (81) connecting the two ribs (83) so that the sole (81) and the two ribs (83) define a groove (85) in which the conveyor belt (4) is positioned, the two ribs (83) being configured to lift, over the conveyor belt (4), an object circulating over the conveyor belt (4), so that the skid shoe (8) allows reducing the forces applied by a non-movable object on the moving conveyor belt (4), the skid shoe (8) being positioned upstream of the movable stop and comprising means for bringing the conveyor belt (4) into contact with an object positioned on the skid shoe (8) to enable driving of the object by the conveyor belt (4) when the movable stop is in the release position,
the contact means comprising at least one elastic member and at least one rotating element,
their combination enabling the contact means to exert a force on the conveyor belt to bring it into contact with an object positioned over the skid shoe, and to enable the displacement of the object according to running of the conveyor belt.

2. The conveyor (1) according to claim 1, **characterized in that** at least one rib (83a) comprises at least one roller (87) enabling the displacement of an object over said at least one rib (83a).

3. The conveyor (1) according to claim 1 or claim 2, **characterized in that** the, or each, elastic member is a spring.

4. The conveyor (1) according to claim 3, **characterized in that** the, or each, rotating element comprises at least one roller (91) rotatably connected to a movable axis (92).

5. The conveyor (1) according to claim 4, **characterized in that** the, or each, rotating element comprises two rollers (91) rotatably connected to the movable axis (92).

6. The conveyor (1) according to one of claims 1 to 5, **characterized in that** the, or each, sole (81) has at least one housing (88) configured to receive the contact means.

7. The conveyor (1) according to one of claims 1 to 6, **characterized in that** the structure (2) comprises at least one profile (21) having at least one grooved portion (22) for receiving the, or each, skid shoe (8).

8. The conveyor (1) according to claim 7, **characterized in that** the structure (2) comprises at least two parallel profiles (21) and two parallel conveyor belts (4) each positioned on a corresponding profile (21), at least one skid shoe (8) being positioned on each profile (21) to enable an object to bear simultaneously on the skid shoes (8) positioned on each of the two profiles (21).
